# EUROPÄISCHE PATENTSCHRIFT

(11) **EP 1 330 382 B1**
(45) Veröffentlichungstag und Bekanntmachung des Hinweises auf die Patenterteilung: **19.05.2004**
(21) Anmeldenummer: 01982448.1
(22) Anmeldetag: 30.10.2001
(51) Int. Cl.: B60T 13/57

(54) **UNTERDRUCK-BREMSKRAFTVERSTÄRKER**
VACUUM BRAKE BOOSTER
SERVOFREIN A DEPRESSION

(30) Priorität: 02.11.2000 DE 10054251
(43) Veröffentlichungstag der Anmeldung: 30.07.2003
(73) Patentinhaber: Lucas Automotive GmbH, 56070 Koblenz (DE)
(72) Erfinder: LOPEZ, Carlos, Erviti, 31003 Pamplona (ES); LARUMBE SAN MARTIN, Isabel, 31010 Baranain (ES)
(74) Vertreter: Röthinger, Rainer, Dipl.-Phys.
(86) Internationale Anmeldenummer: PCT/EP2001/012541
(87) Internationale Veröffentlichungsnummer: WO 2002/036404

(56) Entgegenhaltungen:
- EP-A- 1 079 115
- WO-A-01/10694
- WO-A-99/10216
- DE-A- 2 436 144
- DE-A- 2 927 484
- DE-A- 3 339 356
- US-A- 3 880 978
- US-A- 6 013 219

## Beschreibung

Die Erfindung betrifft einen Unterdruck-Bremskraftverstärker mit einer Unterdruckkammer, einer davon durch eine bewegliche Wand getrennten Arbeitskammer und einem Steuerventil, das ein mit der beweglichen Wand kraftübertragend gekoppeltes Steuerventilgehäuse aufweist und das zur Erzielung einer Druckdifferenz an der beweglichen Wand die Zufuhr von Atmosphärendruck oder Überdruck zur Arbeitskammer in Abhängigkeit von der Verschiebung eines Eingangsgliedes des Unterdruck-Bremskraftverstärkers zu steuern vermag, wobei das Steuerventilgehäuse eine Außenhülse und eine radial innen bezüglich der Außenhülse und koaxial zu dieser angeordnete Innenhülse besitzt, die über eine Mehrzahl von Stegen mit der Außenhülse verbunden ist.

Ein solcher Unterdruck-Bremskraftverstärker in Tandem-Bauweise ist aus der DE-OS 24 36 144 bekannt. Gemäß der Tandem-Bauweise wird ein Gehäuse des Unterdruck-Bremskraftverstärkers von ortsfesten Wänden in zwei separate Gehäuseabschnitte mit jeweils festem Volumen unterteilt. Jeder dieser beiden separaten Gehäuseabschnitte ist von je einer beweglichen Wand in eine Unterdruckkammer und eine Arbeitskammer unterteilt. Insgesamt umfaßt der aus der DE-OS 24 36 144 bekannte Unterdruck-Bremskraftverstärker zwei innerhalb des Gehäuses des Unterdruck-Bremskraftverstärkers angeordnete und starr mit einem Steuerventilgehäuse gekoppelte, bewegliche Wände.

Bei einer Relativbewegung des Steuerventilgehäuses zum Gehäuse des Unterdruck-Bremskraftverstärkers muß eine vakuumdichte Führung des Steuerventilgehäuses gewährleistet sein. Aus diesem Grund besitzt eine Außenhülse des Steuerventilgehäuses radial außen zwei in axialer Richtung versetzte Gleitflächen, auf denen je eine Ringdichtung, welche eine ortsfeste Wand zum Steuerventilgehäuse hin abschließt, gleitet.

Die Außenhülse ist über eine Mehrzahl von Stegen mit einer Innenhülse verbunden, so daß zwischen Außenhülse und Innenhülse ein Luftströmweg entsteht. Die Innenhülse fungiert als Führung für einen mit dem Eingangsglied des Unterdruck-Bremskraftverstärkers gekoppelten Betätigungskolben, welcher über ein zylindrisches Fühlelement mit einer elastomeren Reaktionsscheibe zusammenwirkt. Die vom Betätigungskolben mittels des Fühlelements in die Reaktionsscheibe eingeleiteten und vom Fahrer aufgebrachten Betätigungskräfte werden von der Reaktionsscheibe an einen Reaktionskolben übertragen. Neben den Betätigungskräften werden in die Reaktionsscheibe mittels einer mit der Innenhülse gekoppelten Stirnfläche zusätzlich die Verstärkerkräfte eingeleitet, welche auf die Verschiebung der mit dem Steuerventilgehäuse gekoppelten beweglichen Wänden zurückzuführen sind. Die Verstärkerkräfte werden von der Außenhülse des Steuerventilgehäuses mittels einer Mehrzahl von Stegen auf die Innenhülse übertragen.

Der Erfindung liegt die Aufgabe zugrunde, einen Unterdruck-Bremskraftverstärker anzugeben, bei welchem die in das Steuerventilgehäuse eingeleiteten Verstärkerkräfte zuverlässig auf den Reaktionskolben übertragen werden.

Ausgehend von einem Unterdruck-Bremskraftverstärker der eingangs beschriebenen Art ist diese Aufgabe erfindungsgemäß dadurch gelöst, daß das Steuerventilgehäuse mittels Spritzgießens hergestellt ist und für das Spritzgießen mindestens ein Anspritzpunkt vorgesehen ist, welcher im Bereich der Außenhülse und beabstandet von Befestigungsstellen der Stege an der Außenhülse angeordnet ist.

Die Herstellung eines Steuerventilgehäuses eines Unterdruck-Bremskraftverstärkers mittels Spritzgießens ist äußerst kostengünstig. Bei einem komplexen Werkstück wie dem Steuerventilgehäuse treten jedoch in Zusammenhang mit Spritzgießverfahren häufig Stabilitätsprobleme auf. Aufgrund der hohen Anforderungen an die kraftübertragende Verbindung zwischen der Außenhülse und der Innenhülse eines Steuerventilgehäuses ist die Verwendung von Spritzgießverfahren bei der Herstellung von Steuerventilgehäusen daher nicht unproblematisch. Es wurde nun jedoch gefunden, daß die erfindungsgemäße Anordnung des Anspritzpunkts eine Realisierung von Spritzguß-Steuerventilgehäusen von hoher Stabilität ermöglicht.

Vorteilhafterweise wird die Lage des Anspritzpunkts derart gewählt, daß der Anspritzpunkt in axialer Richtung bezüglich der Befestigungsstellen der Stege an der Außenhülse versetzt ist. Bei Vorhandensein eines derartigen axialen Versatzes kann die Position des Anspritzpunkts in Umfangsrichtung der Außenhülse mit der Position einer Befestigungsstelle in Umfangsrichtung übereinstimmen. Gemäß einer bevorzugten Ausführungsform ist der Anspritzpunkt in einem zentralen Bereich der Außenhülse und vorzugsweise ungefähr in der Mitte zwischen zwei gegenüberliegenden Stirnseiten der Außenhülse angeordnet.

Das Steuerventilgehäuse besteht vorzugsweise aus Kunststoff, z. B. aus faserverstärktem Kunststoff. So kann das mittels Spritzgießens gefertigte Steuerventilgehäuse aus glasfaserverstärktem Polyester und insbesondere aus PET bestehen. Das Spritzgießen gestattet eine einstückige Ausgestaltung der beiden in axialer Richtung voneinander beabstandeten Gleitflächen. Die Innenhülse kann einstückig mit der Außenhülse ausgebildet werden.

Bei dem erfindungsgemäßen Unterdruck-Bremskraftverstärker kann es sich sowohl um einen Unterdruck-Bremskraftverstärker mit nur einer beweglichen Wand als auch um einen Unterdruck-Bremskraftverstärker in Tandem-Bauweise mit zwei beweglichen Wänden handeln. Bei einem Unterdruck-Bremskraftverstärker in Tandem-Bauweise kann die Außenhülse zwei in axialer Richtung beabstandete Gleitflächen besitzen, welche eine vakuumdichte Führung des Steuerventilgehäuses im Gehäuse des Unterdruck-Bremskraftverstärkers ermöglichen. Zweckmäßigerweise besitzt die Außenhülse im Bereich der in axialer Richtung voneinander beabstandeten Gleitflächen unterschiedliche Außendurchmesser, um die Montage des Unterdruck-Bremskraftverstärkers zu erleichtern. Der Außendurchmesser der Außenhülse im Bereich der dem Eingangsglied des Unterdruck-Bremskraftverstärkers abgewandten Gleitfläche kann dabei größer sein als im Bereich der dem Eingangsglied zugewandten Gleitfläche.

Am Übergang zwischen den beiden Gleitflächen kann die Außenhülse zur Aufnahme eines separaten Ringelements ausgebildet sein, welches zur Befestigung einer beweglichen Wand am Steuerventilgehäuse dient. Vorzugsweise ist am Übergang zwischen den beiden Gleitflächen an der Außenhülse ein Anschlag ausgebildet, mit welchem das Ringelement in Betätigungsrichtung des Unterdruck-Bremskraftverstärkers zusammenwirkt und welcher die Einleitung von Verstärkerkräften in die Außenhülse gestattet.

Gemäß einer bevorzugten Ausführungsform der Erfindung ist innerhalb der Innenhülse ein mittels des Betätigungskolbens mit dem Eingangsglied des Unterdruck-Bremskraftverstärkers gekoppeltes Fühlelement geführt, mittels welchem die Betätigungskräfte in eine Reaktionsscheibe eingeleitet werden können. Radial außen auf der Innenhülse kann ein Reaktionskolben geführt sein, der zu diesem Zweck einen die Innenhülse radial außen umgreifenden, z. B. becherförmigen Abschnitt aufweist. Im Grund des hülsenförmigen Abschnitts des Reaktionskolbens kann die Reaktionsscheibe angeordnet werden.

Ein bevorzugtes Ausführungsbeispiel der Erfindung wird mit weiteren Einzelheiten und Vorteilen anhand der beigefügten, schematischen Figuren näher erläutert. Es zeigt:
- Fig. 1: das Steuerventilgehäuse eines erfindungsgemäßen Unterdruck-Bremskraftverstärkers;
- Fig. 2: eine Ansicht eines einem Eingangsglied des Unterdruck-Bremskraftverstärker zugewandten Endes des Steuerventilgehäuses gemäß Fig. 1;
- Fig. 3: eine Ansicht eines einer Unterdruckkammer des Unterdruck-Bremskraftverstärkers zugewandten Endes des Steuerventilgehäuses gemäß Fig. 1;
- Fig. 4: einen Längsschnitt durch das Steuerventilgehäuse gemäß Fig. 1 entlang der Schnittlinie A-A;
- Fig. 5: einen Querschnitt durch das Steuerventilgehäuse gemäß Fig. 1 entlang der Schnittlinie B-B von Fig. 4; und
- Fig. 6: einen Längsschnitt durch ein Steuerventil eines erfindungsgemäßen Unterdruck-Bremskraftverstärkers mit dem Steuerventilgehäuse gemäß den Fig. 1 bis 5.

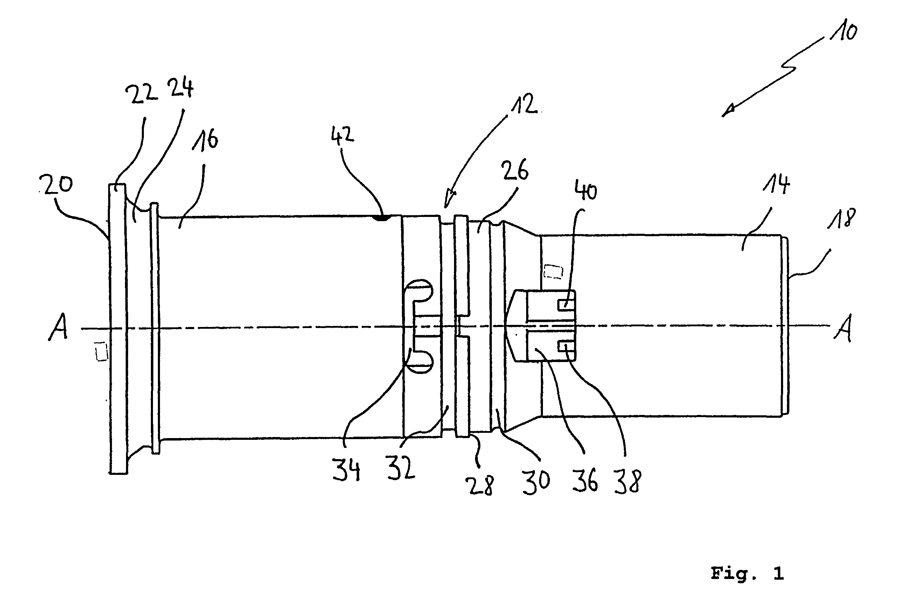

In Fig. 1 ist ein Ausführungsbeispiel eines Steuerventilgehäuses 10 eines erfindungsgemäßen Unterdruck-Bremskraftverstärkers dargestellt. Das Steuerventilgehäuse 10 umfaßt eine im wesentlichen zylindrische Außenhülse 12, welche zwei in axialer Richtung voneinander beabstandete , zylindrische Gleitflächen 14 und 16 aufweist. Eine erste Stirnseite 18 des Steuerventilgehäuses 10 ist in montiertem Zustand des Unterdruck-Bremskraftverstärkers einem Eingangsglied des Unterdruck-Bremskraftverstärkers zugewandt und eine zweite, gegenüberliegende Stirnseite 20 des Steuerventilgehäuses 10 einer Unterdruckkammer des Unterdruck-Bremskraftverstärkers.

Die erste Gleitfläche 14 des Steuerventilgehäuses 10 geht unmittelbar in die erste Stirnseite 18 über und weist einen geringeren Außendurchmesser als die zweite Gleitfläche 16 auf. Die zweite Gleitfläche 16 mündet an ihrem der zweiten Stirnseite 20 des Steuerventilgehäuses 10 zugewandten Ende in eine Durchmessererweiterung 22, innerhalb welcher eine umlaufende Ringnut 24 ausgebildet ist. Die Ringnut 24 dient zur Anbindung eines Membrantellers und einer Rollmembran, welche zusammen eine erste bewegliche Wand bilden, an das Steuerventilgehäuse 10. Eine zweite bewegliche Wand wird im Bereich eines Übergangs 26 zwischen der ersten Gleitfläche 14 und der zweiten Gleitfläche 16 am Steuerventilgehäuse 10 mittels eines weiter unten ausführlicher beschriebenen Ringelements befestigt. Um eine Krafteinleitung vom Ringelement in das Steuerventilgehäuse 10 in Betätigungsrichtung des Bremskraftverstärkers, d. h. in Fig. 1 nach links zu ermöglichen, ist im Bereich des Übergangs 26 ein Anschlag 28 ausgebildet. In Betätigungsrichtung vor sowie in Betätigungsrichtung hinter dem Anschlag 28 ist in der Außenhülse 12 jeweils eine umlaufende Ringnut 30, 32 angeordnet. Die Ringnuten 30, 32 dienen jeweils zur Aufnahme eines für die Anbindung des Ringelements an das Steuerventilgehäuse 10 vorgesehenen und in Fig. 1 nicht dargestellten Ringes.
Die Außenhülse 12 des Steuerventilgehäuses 10 weist auf gegenüberliegenden Seiten je zwei Öffnungen 34, 36 auf, welche in axialer Richtung voneinander beabstandet angeordnet sind. Die der zweiten Stirnseite 20 des Steuerventilgehäuses 10 zugewandte Öffnung 34 verbindet die beiden Vakuumkammern des in Tandem-Bauweise ausgelegten Unterdruck-Bremskraftverstärkers. Durch die weitere, der Stirnseite 18 des Steuerventilgehäuses 10 zugewandten Öffnung 36 ragt in montiertem Zustand des Unterdruck-Bremskraftverstärkers ein mit einem Betätigungskolben gekoppelter und sich senkrecht zum Betätigungskolben erstreckender Querriegel. Für den Querriegel sind innerhalb der Öffnung 36 zwei stegförmige Anschläge 38, 40 ausgebildet. Die stegförmigen Anschläge 38, 40 gewährleisten, daß auch dann, wenn der Querriegel die Anschläge 38, 40 kontaktiert, ein Luftströmweg zwischen den beiden Anschlägen 38, 40 geöffnet bleibt.

Ungefähr in der Mitte zwischen den beiden gegenüberliegenden Stirnseiten 18, 20 des Steuerventilgehäuses 10 ist ein Anspritzpunkt 42 des Spritzguß-Steuerventilgehäuses 10 angeordnet. Das in Fig. 1 dargestellte Steuerventilgehäuse 10 besteht aus glasfaserverstärktem PET und weist eine vollständig einteilige Bauform auf. Bezüglich der in Fig. 1 nicht dargestellten Stege zur Anbindung einer in Fig. 1 ebenfalls nicht dargestellten Innenhülse an die Außenhülse 12 ist der Anspritzpunkt 42 axial in Richtung auf die zweite Stirnseite 20 des Steuerventilgehäuses 10 versetzt. In Umfangsrichtung der Außenhülse 12 hingegen stimmt die Position des Anspritzpunkts 42 mit der Position eines Stegs überein. Die genaue Anordnung des Anspritzpunkts 42 ergibt sich deutlicher aus den nachfolgenden Figuren.

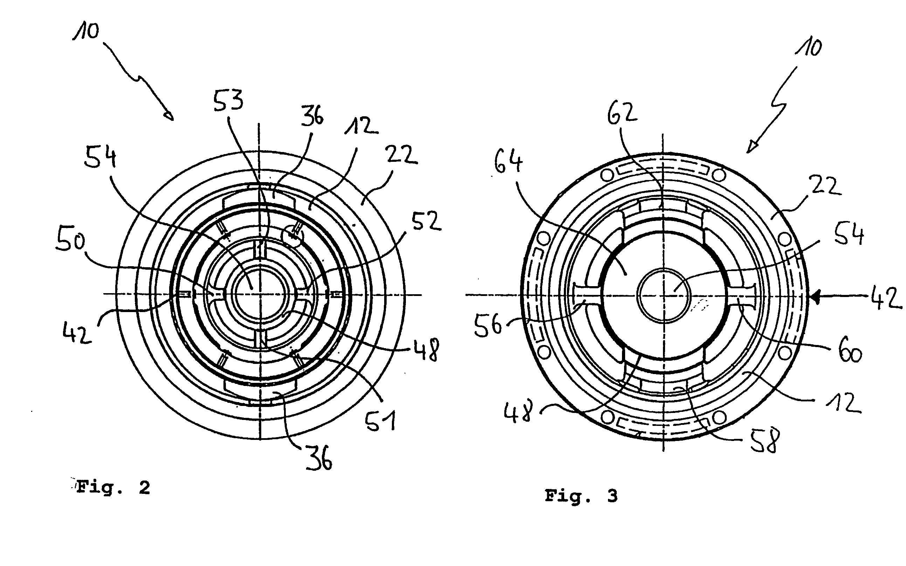

Fig. 2 zeigt in Aufsicht die erste Stirnseite 18 des in Fig. 1 dargestellten Steuerventilgehäuses 10. Deutlich zu erkennen ist die Innehülse 48, welche mittels einer Mehrzahl von Stegen 50, 51, 52, 53 an der Außenhülse 12 befestigt ist. Die Innenhülse 48 weist eine zentrale Durchgangsöffnung 54 auf, welche in montiertem Zustand des Unterdruck-Bremskraftverstärkers als axiale Führung für einen Betätigungskolben fungiert.

Aus Fig. 2 ist ersichtlich, daß die Position des Anspritzpunkts 42 in Umfangsrichtung mit der Position des Stegs 50 in Umfangsrichtung übereinstimmt. Der Anspritzpunkt 42 ist jedoch bezüglich einer Befestigungsstelle des Stegs 50 an der Außenhülse 12 axial in die Zeichenebene hinein versetzt und somit beabstandet von der Befestigungsstelle angeordnet.

In Fig. 3 ist eine Aufsicht auf die zweite Stirnseite 20 des Steuerventilgehäuses 10 gemäß Fig. 1 dargestellt. Wiederum deutlich zu erkennen ist die Innenhülse 48, welche über eine Mehrzahl von weiteren Stegen 56, 58, 60, 62 mit der Außenhülse 12 verbunden ist. Die Position des Anspritzpunkts 42 am Außenumfang der Außenhülse 12 ist durch einen Pfeil wiedergegeben. In der Darstellung gemäß Fig. 3 wird der Anspritzpunkt 42 von der Durchmessererweiterung 22 des Steuerventilgehäuses 10 verdeckt.

Wie Fig. 3 entnommen werden kann, besitzt die Innenhülse 48 an ihrem der Stirnseite 20 zugewandten Ende eine kreisringförmige Stirnfläche 64, mittels welcher die Verstärkerkräfte in eine Reaktionsscheibe eingeleitet werden. Die Verstärkerkräfte werden von der Außenhülse 12 mittels der Stege 56, 58, 60, 62 auf die Innenhülse 48 übertragen.

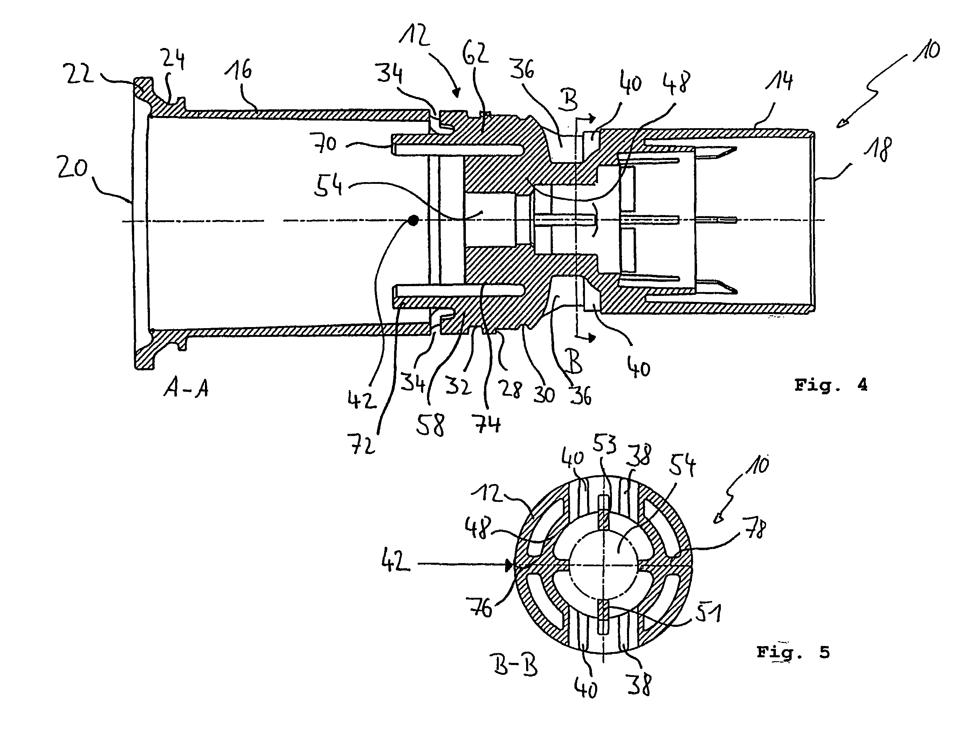

In Fig. 4 ist ein Längsschnitt A-A durch das Steuerventilgehäuse 10 gemäß Fig. 1 dargestellt. Der Anspritzpunkt 42 ist bezüglich der Befestigungsstellen der Stege 58, 62 an der Außenhülse 12 in axialer Richtung versetzt und radial außen an der Außenhülse 12 angeordnet.

Wie Fig. 4 entnommen werden kann, umfaßt das Steuerventilgehäuse 10 zwei zungenförmige Elemente 70, 72, welche sich ausgehend von den Stegen 58, 62 entgegen der Betätigungsrichtung erstrecken. Zwischen der radial äußeren Oberfäche 74 der Innenhülse 48 und den radial inneren Bereichen der beiden zungenförmigen Elemente 70, 72 wird ein in Fig. 4 nicht dargestellter Reaktionskolben des Unterdruck-Bremskraftverstärkers geführt.

Fig. 5 zeigt einen Querschnitt durch das Steuerventilgehäuse 10 gemäß Fig. 1 entlang der Schnittlinie B-B von Fig. 4. Die Position des Anspritzpunkts 42 in Umfangsrichtung der Außenhülse 12 ist durch einen Pfeil gekennzeichnet und stimmt mit der Position einer der beiden Stege 76, 78, mittels welcher die Innenhülse 48 mit der Außenhülse 12 verbunden ist, in Umfangsrichtung überein. Bezüglich der Befestigungsstellen der Stege 76, 78 an der Außenhülse 12 ist der Anspritzpunkt 42 jedoch in axialer Richtung aus der Zeichenebene heraus versetzt.

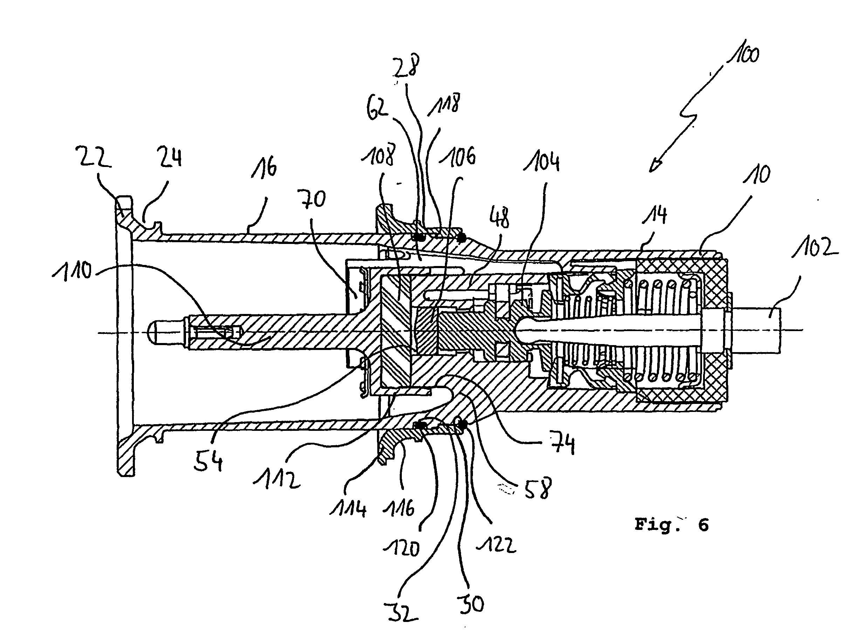

Fig. 6 zeigt einen Längsschnitt durch ein vollständig montiertes Steuerventil 100 mit einem Steuerventilgehäuse 10. Innerhalb des Steuerventilgehäuses 10 befindet sich eine Kraftübertragungsanordnung, welche sich aus einem Eingangsglied 102, einem mit dem Eingangsglied 102 gekoppelten Betätigungskolben 104, einem scheibenförmigen Fühlelement 106, einer elastomeren Reaktionsscheibe 108 sowie einem Reaktionskolben 110 zusammensetzt. Der Reaktionskolben 110 wirkt mit einem dem Bremskraftverstärker funktionell nachgeschalteten, hier nicht dargestellten Hauptzylinder einer hydraulischen Fahrzeugbremsanlage zusammen. Die Funktionsweise eines das in Fig. 6 dargestellte Steuerventil 100 umfassenden Unterdruck-Bremskraftverstärkers ist beispielsweise in der WO 00/07862 beschrieben, auf welche diesbezüglich und was die Ausgestaltung des Gehäuses des Unterdruck-Bremskraftverstärkers und die Anordnung der beweglichen sowie ortsfesten Wände betrifft Bezug genommen wird.

Gemäß Fig. 6 besitzt der Eingangskolben 110 an seinem dem Eingangsglied 102 zugewandten Ende eine becherförmige Durchmessererweiterung 112, welche zwischen der radial äußeren Oberfläche 74 der Innenhülse 48 und den zungenförmigen Elementen 70, 72, von denen eines in Fig. 6 dargestellt ist, geführt wird. Die Reaktionsscheibe 108 ist im Grund der topfförmigen Durchmessererweiterung 112 angeordnet. In der zentralen Durchgangsöffnung 54 der Innenhülse 48 ist das Fühlelement 106 geführt.

Radial außen ist auf der Außenhülse 12 ein Ringelement 114 befestigt, welches eine Nut 116 zur Aufnahme eines Membrantellers und einer Rollmembran, welche zusammen eine weitere bewegliche Wand bilden, aufweist. Das Ringelement 114 besitzt einen zum Anschlag 28 des Steuerventilgehäuses 10 komplementären Anschlag 118 und gestattet somit die Übertragung von mittels der weiteren beweglichen Wand in das Ringelement 14 eingeleiteten Verstärkerkräfte auf die Außenhülse 12. Zur Befestigung des Ringelements 114 an der Außenhülse 12 sind zwei elastische Ringe 120, 122 vorgesehen, welche innerhalb der Ringnuten 32, 36 der Außenhülse 12 aufgenommen sind.

## Patentansprüche

1. Unterdruck-Bremskraftverstärker, mit einer Unterdruckkammer und einer davon durch eine bewegliche Wand getrennten Arbeitskammer, einem Steuerventil (100), das ein mit der beweglichen Wand kraftübertragend gekoppeltes Steuerventilgehäuse (10) aufweist und das zur Erzielung einer Druckdifferenz an der beweglichen Wand die Zufuhr von Atmosphärendruck oder Überdruck zur Arbeitskammer in Abhängigkeit von der Verschiebung eines Eingangsglieds (102) des Unterdruck-Bremskraftverstärkers zu steuern vermag, wobei das Steuerventilgehäuse (10) eine Außenhülse (12) und eine radial innen bezüglich der Außenhülse (12) und koaxial zu dieser angeordnete Innenhülse (48) aufweist, die über eine Mehrzahl von Stegen (51, 52, 53, 54, 56, 58, 60, 62, 76, 78) mit der Außenhülse (12) verbunden ist,
**dadurch gekennzeichnet, daß** das Steuerventilgehäuse (10) mittels Spritzgießens hergestellt ist und mindestens ein Anspritzpunkt (42) vorgesehen ist, der im Bereich der Außenhülse (12) und beabstandet von Befestigungsstellen der Stege (51, 52, 53, 54, 56, 58, 60, 62, 76, 78) an der Außenhülse (12) angeordnet ist.

2. Unterdruck-Bremskraftverstärker nach Anspruch 1,
**dadurch gekennzeichnet, daß** der Anspritzpunkt (42) in axialer Richtung bezüglich der Befestigungsstellen der Stege (51, 52, 53, 54, 56, 58, 60, 62, 76, 78) an der Außenhülse (12) versetzt ist.

3. Unterdruck-Bremskraftverstärker nach Anspruch 2,
**dadurch gekennzeichnet, daß** die Position des Anspritzpunkts (42) in Umfangsrichtung der Außenhülse (12) mit der Position einer Befestigungsstelle eines Stegs (51, 52, 53, 54, 56, 58, 60, 62, 76, 78) an der Außenhülse (12) in Umfangsrichtung übereinstimmt.

4. Unterdruck-Bremskraftverstärker nach einem der Ansprüche 1 bis 3,
**dadurch gekennzeichnet, daß** die Außenhülse (12) zwei gegenüberliegende Stirnseiten (18, 20) aufweist und der Anspritzpunkt (42) ungefähr in der Mitte zwischen den Stirnseiten (18, 20) angeordnet ist.

5. Unterdruck-Bremskraftverstärker nach einem der Ansprüche 1 bis 4,
**dadurch gekennzeichnet, daß** das Steuerventilgehäuse (10) aus einem faserverstärktem Kunststoff besteht.

6. Unterdruck-Bremskraftverstärker nach Anspruch 5,
**dadurch gekennzeichnet, daß** der Kunststoff Polyester ist.

7. Unterdruck-Bremskraftverstärker nach einem der Ansprüche 1 bis 6,
**dadurch gekennzeichnet, daß** der Unterdruck-Bremskraftverstärker in Tandem-Bauweise ausgestaltet ist.

8. Unterdruck-Bremskraftverstärker nach Anspruch 7,
**dadurch gekennzeichnet, daß** die Außenhülse (12) zwei in axialer Richtung beabstandete Gleitflächen (14, 16) aufweist.

9. Unterdruck-Bremskraftverstärker nach einem der Ansprüche 7 oder 8,
**dadurch gekennzeichnet, daß** die beiden Gleitflächen (14, 16) einstückig ausgestaltet sind.

10. Unterdruck-Bremskraftverstärker nach einem der Ansprüche 1 bis 10,
**dadurch gekennzeichnet, daß** die Innenhülse (48) einstückig mit der Außenhülse (12) ausgestaltet ist.

11. Unterdruck-Bremskraftverstärker nach einem der Ansprüche 1 bis 10,
**dadurch gekennzeichnet, daß** innerhalb der Innenhülse (48) ein Fühlelement (106) geführt ist.

12. Unterdruck-Bremskraftverstärker nach einem der Ansprüche 1 bis 12,
**dadurch gekennzeichnet, daß** radial außen auf der Innenhülse (48) ein Reaktionskolben (110) geführt ist.

13. Steuerventilgehäuse (10) für einen Unterdruck-Bremskraftverstärker, mit einer Außenhülse (12) und einer radial innen bezüglich der Außenhülse (12) und koaxial zu dieser angeordneten Innenhülse (48), welche über eine Mehrzahl von Stegen (51, 52, 53, 54, 56, 58, 60, 62, 76, 78) mit der Außenhülse (12) verbunden ist,
**dadurch gekennzeichnet, daß** das Steuerventilgehäuse (10) mittels Spritzgießen hergestellt ist und mindestens ein Anspritzpunkt (42) vorgesehen ist, der im Bereich der Außenhülse (12) und beabstandet von Befestigungsstellen der Stege (51, 52, 53, 54, 56, 58, 60, 62, 76, 78) an der Außenhülse (12) angeordnet ist.

## Claims

1. A vacuum brake booster, having a vacuum chamber and a working chamber separated from one another by a movable wall, a control valve (100) which comprises a control valve housing (10) coupled workingly to the movable wall and which, for achieving a pressure difference at the movable wall, is capable of controlling the supply of atmospheric pressure or above-atmospheric pressure to the working chamber in dependence upon the displacement of an input element (102) of the vacuum brake booster, wherein the control valve housing (10) comprises an outer sleeve (12) and an inner sleeve (48), which is disposed radially at the inside of and coaxially with the outer sleeve (12) and is connected by a plurality of webs (51, 52, 53, 54, 56, 58, 60, 62, 76, 78) to the outer sleeve (12),
**characterized in that** the control valve housing (10) is manufactured by injection moulding and **in that** at least one injection point (42) is provided, which is disposed in the region of the outer sleeve (12) and at a distance from fastening points of the webs (51, 52, 53, 54, 56, 58, 60, 62, 76, 78) to the outer sleeve (12).

2. The vacuum brake booster according to claim 1,
**characterized in that** the injection point (42) is offset in axial direction relative to the fastening points of the webs (51, 52, 53, 54, 56, 58, 60, 62, 76, 78) to the outer sleeve (12).

3. The vacuum brake booster according to claim 2,
**characterized in that** the position of the injection point (42) in circumferential direction of the outer sleeve (12) corresponds to the position of a fastening point of a web (51, 52, 53, 54, 56, 58, 60, 62, 76, 78) at the outer sleeve (12) in circumferential direction.

4. The vacuum brake booster according to one of claims 1 to 3,
**characterized in that** the outer sleeve (12) comprises two opposite ends (18, 20) and the injection point (42) is disposed approximately in the middle between the ends (18, 20).

5. The vacuum brake booster according to one of claims 1 to 4,
**characterized in that** the control valve housing (10) is made of a fibre-reinforced plastics material.

6. The vacuum brake booster according to claim 5,
**characterized in that** the plastics material is polyester.

7. The vacuum brake booster according to one of claims 1 to 6,
**characterized in that** the vacuum brake booster is of a tandem construction.

8. The vacuum brake booster according to claim 7,
**characterized in that** the outer sleeve (12) comprises two sliding surfaces (14, 16) spaced in axial direction.

9. The vacuum brake booster according to one of claims 7 or 8,
**characterized in that** the two sliding surfaces (14, 16) are of an integral construction.

10. The vacuum brake booster according to one of claims 1 to 9,
**characterized in that** the inner sleeve (48) is constructed integrally with the outer sleeve (12).

11. The vacuum brake booster according to one of claims 1 to 10,
**characterized in that** a sensing element (106) is guided inside the inner sleeve (48).

12. The vacuum brake booster according to one of claims 1 to 11,
**characterized in that** a reaction piston (110) is guided on the inner sleeve (48) radially at the outside thereof.

13. A control valve housing (10) for a vacuum brake booster, having an outer sleeve (12) and an inner sleeve (48), which is disposed radially at the inside of and coaxially with the outer sleeve (12) and is connected by a plurality of webs (51, 52, 53, 54, 56, 58, 60, 62, 76, 78) to the outer sleeve (12),
**characterized in that** the control valve housing (10) is manufactured by injection moulding and at least one injection point (42) is provided, which is disposed in the region of the outer sleeve (12) and at a distance from fastening points of the webs (51, 52, 53, 54, 56, 58, 60, 62, 76, 78) to the outer sleeve (12).

## Revendications

1. Servofrein à dépression, comprenant une chambre à dépression et, séparée de celle-ci par une paroi mobile, une chambre de travail, une vanne de commande (100) comportant un boîtier de vanne de commande (10) qui est couplé à la paroi mobile en transmission de force et qui est apte à commander l'admission de pression atmosphérique ou d'une surpression dans la chambre de travail en fonction du déplacement d'un élément d'entrée (102) du servofrein à dépression afin de générer une différence de pression sur la paroi mobile, le boîtier de vanne de commande (10)comprenant une douille externe (12) et une douille interne (48) disposée radialement à l'intérieur par rapport à la douille externe (12) et coaxialement à cette dernière et étant reliée à la douille externe (12) par une multitude d'entretoises (51, 52, 53, 54, 56, 58, 60, 62, 76, 78),
**caractérisé en ce que** le boîtier de vanne de commande (10) est fabriqué par injection et qu'au moins un point d'amorce d'injection (42) est prévu qui est disposé dans la région de la douille externe (12) et à distance par rapport aux endroits de fixation des entretoises (51, 52, 53, 54, 56, 58, 60, 62, 76, 78) sur la douille externe (12).

2. Servofrein à dépression selon la revendication 1, **caractérisé en ce que** le point d'amorce d'injection (42) est décalé en direction axiale par rapport aux endroits de fixation des entretoises (51, 52, 53, 54, 56, 58, 60, 62, 76, 78) sur la douille externe (12).

3. Servofrein à dépression selon la revendication 2, **caractérisé en ce que** la position du point d'amorce d'injection (42) en direction périphérique de la douille externe (12) coïncide avec la position d'un endroit de fixation d'une entretoise (51, 52, 53, 54, 56, 58, 60, 62, 76, 78) sur la douille externe (12) en direction périphérique.

4. Servofrein à dépression selon l'une des revendications 1 à 3, **caractérisé en ce que** la douille externe (12) comporte deux faces frontales (18, 20) opposées l'une de l'autre, et que le point d'amorce d'injection (42) se situe environ au milieu entre les faces frontales (18, 20).

5. Servofrein à dépression selon l'une des revendications 1 à 4, **caractérisé en ce que** le boîtier de vanne de commande (10) consiste en une matière synthétique renforcée par des fibres.

6. Servofrein à dépression selon la revendication 5, **caractérisé en ce que** la matière synthétique est un polyester.

7. Servofrein à dépression selon l'une des revendications 1 à 6, **caractérisé en ce que** le servofrein à dépression présente la forme d'une construction en tandem.

8. Servofrein à dépression selon la revendication 7, **caractérisé en ce que** la douille externe (12) comporte deux faces de glissement (14, 16) situées à distance axiale l'une de l'autre.

9. Servofrein à dépression selon l'une des revendications 7 ou 8, **caractérisé en ce que** les deux faces de glissement (14, 16) sont en une pièce.

10. Servofrein à dépression selon l'une des revendications 1 à 10, **caractérisé en ce que** la douille interne (48) est façonnée en une pièce avec la douille externe (12).

11. Servofrein à dépression selon l'une des revendication 1 à 10, **caractérisé en ce qu'**un élément palpeur (106) est guidé à l'intérieur de la douille interne (48).

12. Servofrein à dépression selon l'une des revendications 1 à 12, **caractérisé en ce qu'**un piston à réaction (110) est guidé radialement à l'extérieur sur la douille interne (48).

13. Boîtier de vanne de commande (10) pour un servofrein à dépression, comportant une douille externe (12) et une douille interne (48) disposée radialement à l'intérieur par rapport à la douille externe (12) et coaxialement à cette dernière, la douille interne étant reliée à la douille externe (12) par une multitude d'entretoises (51, 52, 53, 54, 56, 58, 60, 62, 76, 78),
**caractérisé en ce que** le boîtier de vanne de commande (10) est fabriqué par injection et qu'au moins un point d'amorce d'injection (42) est prévu qui est disposé dans la région de la douille externe (12) et à distance par rapport aux endroits de fixation des entretoises (51, 52, 53, 54, 56, 58, 60, 62, 76, 78) sur la douille externe (12).
